# EUROPEAN PATENT SPECIFICATION

(11) **EP 3 211 598 B1**
(45) Date of publication and mention of the grant of the patent: **25.09.2019**
(21) Application number: 17157981.6
(22) Date of filing: 24.02.2017
(51) Int. Cl.: G06T 11/00, G06T 15/00, G09G 5/36

(54) **SYSTEM AND METHOD FOR ACCELERATED RENDERING OF TWO-DIMENSIONAL GRAPHICS**
SYSTEM UND VERFAHREN ZUM BESCHLEUNIGTEN RENDERN ZWEI-DIMENSIONALER GRAPHIK
SYSTÈME ET PROCÉDÉ POUR LE RENDU GRAPHIQUE ACCÉLÉRÉ EN DEUX DIMENSIONS

(30) Priority: 26.02.2016 US 201615054937
(43) Date of publication of application: 30.08.2017
(73) Proprietor: BlackBerry Limited, Waterloo, ON N2K 0A7 (CA); 2236008 Ontario Inc., Waterloo, ON N2K 0A7 (CA)
(72) Inventor: BELANGER, Etienne, Kanata, Ontario K2K 3K4 (CA); MAWDSLEY, Jason Robert, San Jose, CA California 95136 (US); CHANDA, Rupen, San Mateo, CA California 94403 (US)
(74) Representative: Roberts, Gwilym Vaughan

(56) References cited:
- US-A1- 2010 164 983
- CONVERSY AND J-D FEKETE S: "The svgl toolkit: enabling fast rendering of rich 2D graphics", TECHNICAL REPORT-ÉCOLE DES MINES DE NANTES, FRANCE, no. 2/01/info, 1 January 2002 (2002-01-01) , pages 1-11, XP002539626,

## Description

### BACKGROUND

### 1. Technical Field

The present disclosure relates to the field of computer graphics. In particular, to a system and method for accelerated rendering of two-dimensional graphics.

### 2. Related Art

Many modern computing devices include both a central processing unit (CPU) and a graphics-processing unit (GPU). The GPUs typically accelerate rendering of three-dimensional (3D) graphics. 3D graphic designers, including computer gaming designers, have numerous options available to generate 3D graphical objects that can be accelerated using 3D GPUs. 2D graphic designers, including user interface (UI) designers, have more limited options since the 2D designers prefer to utilize 2D graphical objects that are not easily accelerated using 3D GPUs. Attempts have been made to directly accelerate the rendering of 2D graphical objects with GPUs but the results have not been good enough to include 2D graphical object rendering acceleration in most GPUs. There is a need for accelerating the rendering of 2D graphical objects, such as those created by 2D graphic designers, on widely available 3D GPUs.

### BRIEF DESCRIPTION OF DRAWINGS

The system may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.
Fig. 1 is a schematic representation of a system for accelerated rendering of two-dimensional graphics.
Fig. 2 is a representation of a method for accelerated rendering of two-dimensional graphics.
Fig. 3 is a further schematic representation of a system for accelerated rendering of two-dimensional graphics.

### DETAILED DESCRIPTION

A system and method for accelerated rendering of two-dimensional graphics may receive two or more two-dimensional graphical objects. Display characteristics associated with a target display may be received. Two or more three-dimensional graphical objects may be generated from the two or more two-dimensional graphical objects responsive to the received display characteristics where each of the generated three-dimensional graphical objects has a derived generation error that is below a generation error threshold. A scene graph associated with the two or more three-dimensional graphical objects may be created. A graphical layout associated with the two or more three-dimensional graphical objects may be created. The two or more three-dimensional graphical objects may be sent to a three-dimensional graphical renderer responsive to the graphical layout and the scene graph.

Two-dimensional (2D) graphic designers, including user interface (UI) designers, create graphical applications that may concentrate on providing the most flexibility to the graphic designers or focus on improving rendering performance. Graphical applications that focus on ease of flexibility for the graphic designers may follow an approach where the entire graphical application is modeled as a drawing canvas on which free-form drawing is performed. The rendering back-end, typically a graphics processing unit (GPU), has no knowledge of the task model and is only presented with complex 2D drawing primitives such as paths, gradients, and images that are processed and rendered to the display. The 2D drawing primitives may be scalable vector graphics (SVG) that are not suitable for acceleration on modern GPUs. The 2D drawing primitives may be converted to 3D drawing primitives, or drawables, that are suitable for acceleration on the GPU. For example, gradients may be converted into textures where special shaders may be generated, or the geometry may be tessellated and may include per-vertex colors. A lack of context may result in the GPU performing all the adaptation work as each 3D drawing primitives is processed. At best, a cache may be used to prevent unnecessary recalculations, but caching requires constant hashing and checking of the incoming 3D drawing primitives to find matches.

Graphical applications that focus on improving rendering performance may impose a hardware model associated with the GPU. The graphical application may be limited to simple drawing primitives that include, for example, lines, rectangles, images, and text. The 2D graphic designers may be forced to decompose the drawing canvas, or user interface (UI), into these simple drawing primitives. Patterns of groups of simple drawing primitives may be made into controls to speed-up development. Grouping simple drawing primitives may improve productivity, but only if the application developer is willing to re-use the controls that are available. Creating new controls may be a tedious task using only simple drawing primitives.

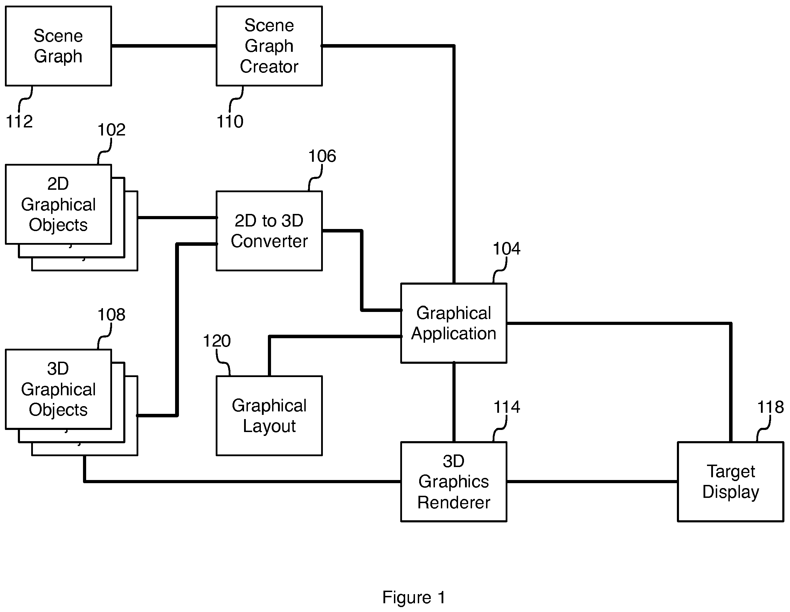

Figure 1 is a schematic representation of a system for accelerated rendering of two-dimensional graphics 100. The system 100 is an example system for accelerating rendering of two-dimensional graphics. Two or more two-dimensional (2D) graphical objects 102, such as UI elements, may be created by, for example, a graphic designer. Each 2D graphical object 102 may be rendered as, for example, an icon in a user interface, a background, or items in a menu utilizing a 2D graphics renderer. The content of the two or more 2D graphical objects 102 may be 2D drawing primitives that may include one or more paths, gradients, text and procedural textures. The 2D renderer may utilize an SVG application-programming interface including, for example, the OPENVG format standardized by The Khronos Group. The two or more 2D graphical objects 102 may be rendered as, for example, a composited 2D user interface or a 2D graphics application.

A graphical application 104 may control the system for accelerated rendering of the two or more 2D graphical objects 102 for presentation on a target display 118. The graphical application 104 may generate the two or more 2D graphical objects 102. In one alternative, the graphical application 104 may utilize the two or more 2D graphical objects 102 created by 2D graphic designers. The graphical application 104 may convert the two or more 2D graphical objects 102 into two or more 3D graphical objects 108. In one alternative the graphical application 104 may cause a 2D to 3D convertor 106 to convert the two or more 2D graphical objects 102 into two or more 3D graphical objects 108. The 3D graphical objects 108, or drawables, may contain, for example, render state, geometry stored in vertex buffer objects, raster data kept in texture objects, and shaders compiled into program objects. A 3D graphics renderer 114, or GPU, may utilize an application-programming interface including, for example, the OPENGL formats standardized by The Khronos Group. OPENGL® is a registered trademark of Silicon Graphics, Inc. of Mountain View, California. The 3D graphic renderer 114 may accelerate rendering of the two or more 3D graphical objects 108.

The conversion of the two or more 2D graphical objects 102 into the two or more 3D graphical objects 108 may be responsive to the characteristics of the target display 118. The characteristics of the target display 118 may dictate the amount, or level of detail for the rendered graphics to appear as the graphic designer intended. The characteristics of the target display 118 may include, for example, any one or more of the size, resolution, pixel density, display type and viewing distance from the user. A model of a set of 3D graphical objects may occupy anywhere from a few pixels to the entire screen. The 3D structure of the model may be described using triangles. A user may directly control the perspective, or adjust the (point-of-view) camera position, inside the model. The model may be rendered based on the perspective set by the user. Without differing levels of detail, the representation of a model may be too coarse at close range or may result in too many triangles occupying the same pixel. A coarse model may not appear as the graphic designed indented and too many triangles occupying the same pixel may be wasteful of GPU resources. Discrete levels of detail may mitigate this problem although popping artifacts may appear when changing from one discrete level of representation to another. Discrete levels of detail may also result in relatively higher average error values. A multi-resolution technique may be used to provide continuous level of detail, without the popping effect, and with better accuracy.

A terrain may require special level of detail techniques because the model is infinite in nature, and the same level of detail cannot be used to represent the entire visible set. A terrain skin must be further subdivided so that the portions that are closer to the camera may be represented with higher fidelity than those that are further away. Care may be taken so that discontinuities are not produced when the terrain transitions from one level of detail to another.

2D graphics, including user interfaces, may not often use perspective transformations since the distance to the camera may be constant so level of detail techniques may not typically be used. Unlike 3D visualization, the user interacts with the 2D models, but may not be in direct control of the camera. With perspective transformations, the graphics designer may lock down the graphical assets, or 3D graphical objects 108, to very precise pixel representations. These representations may be pixel perfect when the size of the application and the target resolution are also locked.

Graphic designers may produce multiple versions of each asset and layouts for a user interface that may be used for a continuous range of sizes and resolutions. Producing multiple versions of each asset may be similar to discrete level of detail techniques. Popping may not occur because the distance to the camera does not constantly change. However, the model may only be pixel perfect for the sizes and resolutions the assets were designed for. Everything in between may be far from pixel perfect, and will have a growing error value until the next level is reached. A pixel perfect representation may be the exact resolution for which the asset was designed without any further resampling caused by changes in the distance to the camera, i.e. zooming. Resampling will increase the amount of error, or error value, when compared to a pixel perfect representation.

The system 100 may utilize multi-resolution concepts in the context of rendering hardware accelerated user interfaces when they need to target a wide range of screen sizes and resolutions. The conversion of 2D graphical objects 102 to 3D graphical objects 108 may minimize the average error over the range of sizes and resolutions supported at the expense of a potentially higher error, i.e. not pixel perfect, for one or more particular size and resolution combinations. Multi-resolution techniques may also utilize less data to represent the graphical objects compared to the traditional approach of supplying multiple versions of the same graphical objects rendered at different resolutions. The graphical designer may not need to provide multiple versions of each graphical object rendered at different resolutions.

Multi-resolution techniques may operate on triangular meshes. Polygonal decimation may provide lower fidelity versions of a high-fidelity triangular mesh model. Polygonal decimation of triangular meshes may be used to render user interface objects. However, as described above graphical designers do not typically generate triangular meshes to represent user interface elements. Instead, graphic designers may use paths, gradients, glyphs, and masks to construct more complex shapes. 2D hardware accelerators, such as those supporting OpenVG, may draw complex shapes without a conversion to triangular meshes.

When targeting a 3D graphics renderer 114, rather than transforming the paths into triangular meshes, the shapes may be saved in their native vector form, until the output resolution is known to the 3D graphics renderer 114. A triangular mesh may be generated that approximates a path from its analytical description such that the average error does not exceed a threshold and this may be a more efficient process than performing repeated polygonal decimations on a high fidelity tessellation. A vector representation of the path may also be more compact than any triangular mesh approximation at the highest level of detail.

Further optimization of the process of tessellating and then rendering complex shapes using the 3D graphics renderer 114 are possible. As described above, user interfaces differ from typical 3D visualization applications in that the user may never be in direct control of the camera. The size of each graphical object may be relatively constant when the camera does not move. When the graphical objects remain relatively constant in size, the main parameters that influence triangular representations may include, for example, the overall size of the application window, the resolution of the target display 118 and the viewing distance.. Considering that the parameters, or display characteristic, may not change as a direct consequence of the user interacting with the application, a particular polygonal approximation may be re-used for an extended period of time, which lends itself well to caching of these triangular representations.

In another alternative, modern 3D graphics renderers may allow graphic developers to create shaders that may be utilized to apply transformations to vertices and fragments. Geometry shaders may also be used to perform some tessellation directly on the 3D graphics renderer 114. Transform feedback may be used to save the results in a vertex buffer object that may be re-used until the error thresholds change.

Raster data sets, such as the raw red-green-blue (RGB) triples, or red-green-blue-alpha (RGBA) quadruples, used to represent images, may be considered as approximations of a higher fidelity signal. Thus, similar techniques may be applied to such sets to provide multi-resolution versions of the image. Raster data sets may be treated as an image-scaling problem, and any of the well-known image scaling algorithms may be used to provide a lower fidelity version of a high detail image. The 3D graphics renderer 114 may sample image data using, for example, bilinear filtering. When the quality of bilinear filtering is acceptable, no additional work may be required, and the source image may be directly uploaded to the 3D graphics renderer 114 and utilized as a texture. The bilinear filtering may cause visible artifacts but the quality of the bilinear filtering should not be perceptibly distracting. In one alternative, fragment shaders may be used to provide a higher degree, or quality, of filtering.

If the quality achieved with bilinear filtering is not high enough, or in an effort to save memory or increase performance, the conversion of a high fidelity asset may be performed offline and the results saved as a texture. In the case of providing a lower fidelity version of the source, memory savings may be achieved because a copy of the low fidelity version that is kept may require less memory than the original high fidelity data set. Performance may be improved because there may be no need to perform any filtering at runtime. A single texture element may be required per fragment sample. Note that multiple samples, therefore multiple texture elements, may be required to eliminate aliasing artifacts produced by moving raster images. The smaller, lower fidelity texture may improve performance by increasing the probability of hits in the texture cache. Lower fidelity textures may be represented by smaller amounts of data allowing more textures to be stored in the texture cache concurrently. Processing the raster data in a preloading phase may allow any algorithm to be used, for example, a more computationally complex filter that may produce higher quality results. Since the results may be computed once and reused at runtime, the textures may be manipulated using, for example, statistical methods, spectral methods, partial differential equations (PDE), polynomials, or simple kernels.

It may be common for graphical designers to provide handcrafted images for different target display sizes and/or resolutions. The technique described above may preserve the high fidelity image and decimate the image as needed. In some cases, it may still be desirable to allow the graphical designer to provide an exact image to be utilized at a particular size or resolution. Images may be treated as separate assets allowing the graphical application 104 to select which asset to utilize based on the relevant parameters.

Storing the same image at different resolutions may increase the total size of the assets. In one alternative, a way to reduce the storage may be to calculate the set difference between the lower resolution image supplied by the graphic designer and the decimation of the high fidelity asset and encode the set difference as part of the raster asset. The image asset may now include a high fidelity representation, which may or may not be compressed, along with N set differences for the N additional images supplied by designers, to be used at given resolutions (where N is a positive integer). These set differences may themselves be compressed. The set differences may be mostly high frequency changes where the lower frequency components may be obtained through the normal decimation algorithm. The high frequency components may include sharper edges or more fine detail in an image. A wavelet compression technique applied over the set difference may provide efficient data compression.

The two or more 3D graphical objects 108 may be generated from the two or more 2D graphical objects 102 responsive to the display characteristics of the target display 118. Each of the generated 3D graphical objects 108 may have a derived generation error that is below a generation error threshold. For example, the tessellation of a vector representation may contain a finer triangular mesh to reduce the generation error. The 3D graphics renderer 114 may accelerate rendering of the two or more 3D graphical objects 108 where the two or more 3D graphical objects 108 may be re-used as long as the tessellation parameters remain unchanged. For example, a rounded rectangle would keep using the vertices stored in a vertex buffer object, or an arc stored in a texture object, until the resolution changed, or the radius of curvature is redefined
The graphical application 104 may instruct a scene graph creator 110 to create a scene graph 112 associated with the two or more 3D graphical objects 108. In one alternative, the graphical application 104 may create the scene graph 112. In another alternative, the scene graph 112 may be associated with the two or more 2D graphical objects 102 and the two or more 3D graphical objects 108. The graphical application 104 and the scene graph creator 110 may maintain the scene graph 112 responsive to changes including, for example, addition, removal and modification of one or more 3D graphical objects 108. The scene graph 112 may be created or maintained where the intermediate nodes provide the grouping and state inheritance functionality. One or more leaf nodes may be attached to each of the intermediate nodes forming a tree structure. Each intermediate node may, for example, group multiple leaf nodes. The leaf nodes may be a graphical object or UI element, where each graphical object may be a mini canvas of its own.

Some instantiations, or compilations, of a path, or of a procedural texture, may be saved to storage as assets. Saving the assets may allowfor the framework to provide a similar flexibility to that achieved by canvas approaches while delivering performance that may be equivalent to scene graph based approaches, especially on lower capability (e.g. performance) devices. Once converted, the UI element or 3D graphical objects 108, or more specifically the drawables used to render the UI element, may reach the same, or similar, efficiency that a scene graph would with a dedicated node type for the more complex shape. A difference may be that the scene graph does not need to be changed in order to add support for more complex primitives, or those complex primitives do not have to be decomposed into simpler primitives that may be already supported.

The UI elements may be converted into drawables, or 3D graphical objects 108, at any stage of the graphic application development. For example, a path representing a simple rectangle may be converted into two triangles in a very early stage, since the tessellation is not affected by resolution. At runtime, when the UI element is loaded, it may already be populated with drawables, where in this case it is a single drawable. In cases where the converted drawables are guaranteed to be static, the UI elements may not have to be stored in the scene graph.

The graphical application 104 may create or receive a graphical layout 120 associated with the two or more 3D graphical objects 108. The graphical layout 120 may represent the composition of the two or more 3D graphical objects 108 on the target display 118. For example, the graphical layout 120 may indicate where each 3D graphical object 108 may be rendered on the target display 118. The graphical layout 120 may include the location, z-plane ordering and alpha blending of each 3D graphical object 108. The graphical layout 120 may be modified by, for example, a user interaction or an application. The modication may include, for example, changing the position of one or more 3D graphical objects 108. The graphical application 104 may send the two or more 3D graphical objects 108 to the 3D graphical renderer 114 in response to the graphical layout 120 and the scene graph 112. The graphical application 104 may determine, for example, which 3D graphical objects 108 to send to the 3D graphical renderer 114 and in what order. The order in which the 3D graphical objects 108 may be sent to the 3D graphics renderer 114 may affect the rendering performance of the 3D graphics renderer 114. For example, sending 3D graphical objects 108 in a z-plane order that is front to back may allow the 3D graphics renderer 114 disregard any unseen 3D graphical objects 108.

The system for accelerated rendering of 2D graphics described above may allow graphic designers to create graphical applications that provide a range of expressiveness and performance. The workflow may have several stages that allow a distribution of the processing costs across each different stage balancing performance without restricting how graphic designers articulate the desired look and feel of the graphical application. The workflow may include, creating 2D graphical objects 102, designing the graphical application 104 and determining when and how to convert the 2D graphical objects 102 into 3D graphical objects 108. Additionally, the system for accelerated rendering of 2D graphics may make it easier for application developers to provide user interfaces that adapt to different contexts that may be parameterized by, for example, the display technology, display resolution, pixel density of the display, and availability of input devices (touch, mouse, keyboard and voice). Display technologies may include cathode ray tubes (CRT), liquid crystal display (LCD), organic light emitting diode (OLED), and liquid crystal on silicon (LCOS). Pixel density may be in dots per square inch (DPI).

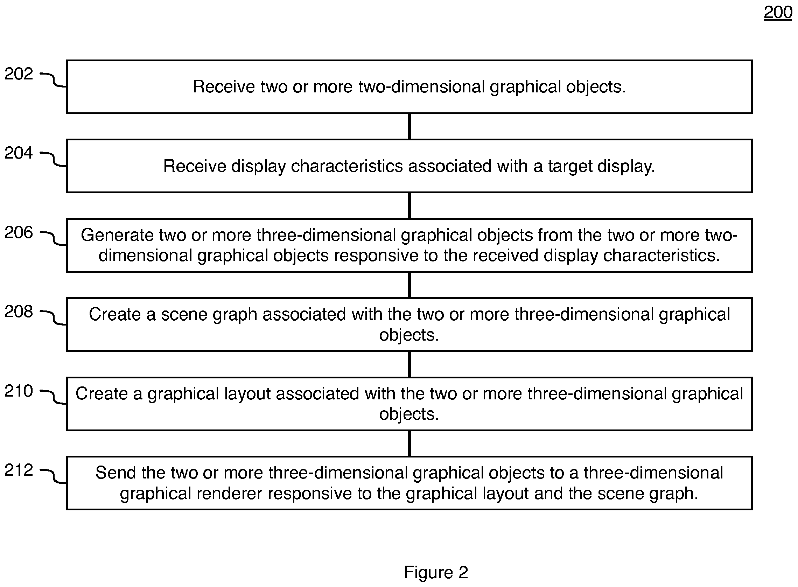

Figure 2 is a representation of a method for accelerated rendering of two-dimensional graphics. The method 200 may be, for example, implemented using the systems 100 described herein with reference to Figures 1. The method 200 includes the act of receiving two or more two-dimensional graphical objects 202. Display characteristics associated with a target display may be received 204. Two or more three-dimensional graphical objects may be generated from the two or more two-dimensional graphical objects responsive to the received display characteristics where each of the generated three-dimensional graphical objects has a derived generation error that is below a generation error threshold 206. The received display characteristics may be used to determine the amount of detail when generating the three-dimensional graphical objects. The amount of detail to be used when generating the three-dimensional graphical objects may be determined by calculating the generation error and comparing the calculation to a generation error threshold. For example, the number of triangles utilized to represent a surface may be increased to reduce the generation error. A scene graph associated with the two or more three-dimensional graphical objects may be created 208. A graphical layout associated with the two or more three-dimensional graphical objects may be created 210. The graphical layout may represent the location, the depth and the blending amount of the two or more three-dimensional graphical objects rendered to a graphical display. The two or more three-dimensional graphical objects may be sent to a three-dimensional graphical renderer responsive to the graphical layout and the scene graph 212. The graphical layout may determine, for example, the order in which the leaf nodes containing three-dimensional graphical objects may be sent to the three-dimensional graphical renderer. The three-dimensional graphical objects may, for example, be sent to the three-dimensional graphical renderer according to the depth of each three-dimensional graphical object to reduce the computational processing performed by the three-dimensional graphical renderer.

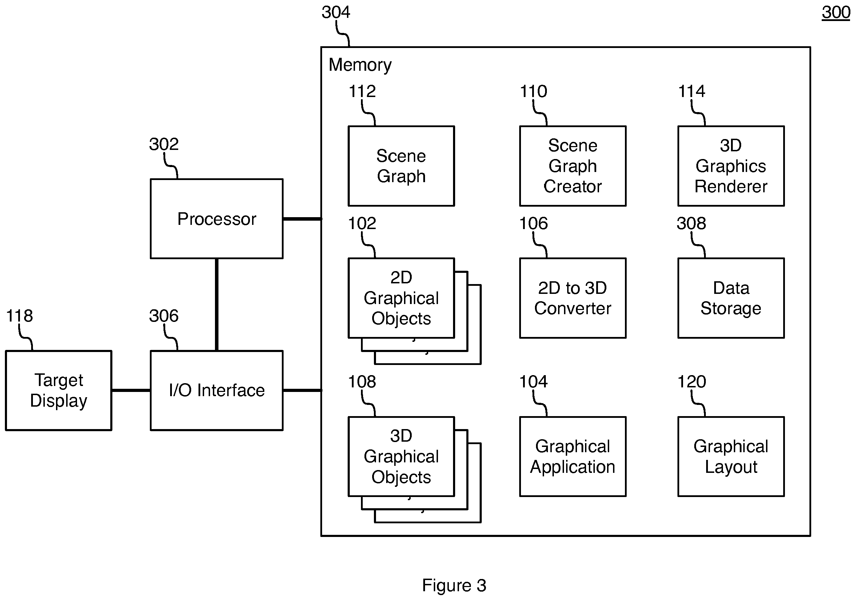

Figure 3 is a further schematic representation of a system for accelerated rendering of two-dimensional graphics. The system 300 comprises a processor 302, memory 304 (the contents of which are accessible by the processor 302) and an I/O interface 306. The memory 304 may store instructions which when executed using the processor 302 may cause the system 300 to render the functionality associated with accelerated rendering of two-dimensional graphics as described herein. For example, the memory 304 may store instructions which when executed using the processor 302 may cause the system 300 to render the functionality associated with the 2D graphical objects 102, the 3D graphical objects 108, the graphical application 104, the 2D to 3D converter 106, the scene graph creator 110, the scene graph 112 and the 3D graphics renderer 114 as described herein. In addition, data structures, temporary variables and other information may store data in data storage 308.

The processor 302 may comprise a single processor or multiple processors that may be disposed on a single chip, on multiple devices or distributed over more that one system. The processor 302 may be hardware that executes computer executable instructions or computer code embodied in the memory 304 or in other memory to perform one or more features of the system. The processor 302 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 304 may comprise a device for storing and retrieving data, processor executable instructions, or any combination thereof. The memory 304 may include non-volatile and/or volatile memory, such as a random access memory (RAM), a read-only memory (ROM), an erasable programmable read-only memory (EPROM), or a flash memory. The memory 304 may comprise a single device or multiple devices that may be disposed on one or more dedicated memory devices or on a processor or other similar device. Alternatively or in addition, the memory 304 may include an optical, magnetic (hard-drive) or any other form of data storage device.

The memory 304 may store computer code, such as the 2D graphical objects 102, the 3D graphical objects 108, the graphical application 104, the 2D to 3D converter 106, the scene graph creator 110, the scene graph 112 and the 3D graphics renderer 114 as described herein. The computer code may include instructions executable with the processor 302. The computer code may be written in any computer language, such as C, C++, assembly language, channel program code, and/or any combination of computer languages. The memory 304 may store information in data structures including, for example, mixing gains.

The I/O interface 306 may be used to connect devices such as, for example, the target display 118 and to other components of the system 300.

All of the disclosure, regardless of the particular implementation described, is exemplary in nature, rather than limiting. The system 300 may include more, fewer, or different components than illustrated in Figure 3. Furthermore, each one of the components of system 300 may include more, fewer, or different elements than is illustrated in Figure 3. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for accelerated rendering of two-dimensional graphics have been described, it will be apparent to those of ordinary skill in the art that many more embodiments and implementations are possible within the scope of the present invention. Accordingly, the invention is not to be restricted except in light of the attached claims and their equivalents.

## Claims

1. A method for accelerated rendering of two-dimensional graphics, the method comprising:
receiving one or more two-dimensional graphical objects (202);
receiving a display characteristic parameter that identifies a level of detail in which graphics are displayed on a target display (118, 204);
generating one or more three-dimensional graphical objects (108) from the one or more two-dimensional graphical objects (102) responsive to the received display characteristic parameter (206);
creating a scene graph associated with the one or more three-dimensional graphical objects (208);
creating a graphical layout associated with the one or more three-dimensional graphical objects (108, 210); and
sending the one or more three-dimensional graphical objects (108) to a three-dimensional graphical renderer (114) responsive to the graphical layout and the scene graph (212);
where the sending of the three-dimensional graphical objects (108) to the three dimensional graphical renderer (114) is sequenced by a function based on the relative depth of the created graphical layout.

2. The method of claim 1 where receiving the one or more two-dimensional graphical objects further comprises receiving, from a memory, the one or more two-dimensional graphic objects, where the two or more two-dimensional graphic objects were previously stored in the memory before runtime.

3. The method of claim 1 or 2, where each of the two-dimensional graphical objects (102) includes one or more two-dimensional drawing primitives represented using scalable vector graphics, or
where the one or more two-dimensional drawing primitives include any of: a plurality of paths, a plurality of gradients, a plurality of glyphs, a plurality of masks and a plurality of images.

4. The method of any preceding claims, where generating the one or more three-dimensional graphical objects further comprises generating a mesh representative of the one or more two-dimensional graphical objects (102), the mesh comprising a plurality of primitives renderable by a three-dimensional graphical renderer (114), where a total quantity of the plurality of primitives included the mesh is based on the received display characteristic parameter.

5. The method of any preceding claim, where the display characteristic parameter includes any one or more of: a size of a target display, a resolution of the target display, a pixel density of the target display, and a target display type.

6. The method of any preceding claim, where generating the three-dimensional graphical objects (108) from the two-dimensional graphical objects (102) includes any one or more acts of: generating textures from gradients, tessellating a geometry of the two or more three-dimensional graphical objects (108) and a resampling of images.

7. The method of any preceding claim, where generating the three-dimensional graphical objects (108) from the two-dimensional graphical objects (102) includes: generating the three-dimensional graphical objects (108) during a runtime where the two-dimensional graphical objects were previously created before the runtime (202).

8. The method of any preceding claim, where the scene graph associates the three-dimensional graphical objects (108) as one or more leaf nodes where each of the leaf nodes comprise a portion of a tree structure.

9. The method of claim 8, where the scene graph includes grouping the one or more leaf nodes with one or more intermediate nodes within the scene graph.

10. The method of any preceding claim, where the graphical layout includes any of: a location, a depth and a blending parameter that are each associated with generating the t three-dimensional graphical objects (108).

11. The method of any preceding claim, where the generating one or more three-dimensional graphical objects (108) further comprises approximating the one more three-dimensional graphical objects (102) based on the received display characteristic parameter (206) and the one or more two-dimensional graphical objects, where each of the generated three-dimensional graphical objects includes a corresponding derived generation error based on the approximating, where each of the corresponding derived generation error for each of the three-dimensional graphical objects is below a predefined generation threshold associated with the display parameter.

12. A computer readable medium comprising executable instructions for implementing the method of any preceding claim.

13. A system for accelerated rendering of two-dimensional graphics **characterized by**:
a processor (302);
a memory (304) coupled to the processor (302) containing instructions, executable by the processor (302), for performing the method of any one of claims 1 to 11.

14. The system of claim 13, where the instructions cause:
a receiver to receive the two-dimensional graphical objects (102);
a graphical application (104) to receive a display characteristics parameter (118) that identifies a level of detail in which graphics are displayed on a target display (118);
a three-dimensional generator (114) to generate the three-dimensional graphical objects (108) from the two-dimensional graphical objects (102) that is responsive to received display characteristics parameter;
a scene graph creator (110) to create the scene graph associated with the three-dimensional graphical objects (108);
a graphical layout creator (104, 120) to create the graphical layout associated with the three-dimensional graphical objects (108); and
a sender to send the three-dimensional graphical objects (108) to the three-dimensional graphical renderer (114) where the sending of the three-dimensional graphical objects (108) to the three-dimensional graphical renderer (114) is sequenced by a function based on a relative depth of the created graphical layout.

15. The system of claim 14, where the processor (302) comprises a graphics processor.

## Patentansprüche

1. Verfahren zum beschleunigten Rendern von zweidimensionaler Grafik, wobei das Verfahren umfasst:
Empfangen eines oder mehrerer zweidimensionaler grafischer Objekte (202);
Empfangen eines Anzeigekenngrößenparameters, der einen Detaillierungsgrad kennzeichnet, mit dem Grafik auf einer Zielanzeige (118, 204) angezeigt wird;
Erzeugen eines oder mehrerer dreidimensionaler grafischer Objekte (108) aus dem einen oder den mehreren zweidimensionalen grafischen Objekten (102) als Reaktion auf den empfangenen Anzeigekenngrößenparameter (206);
Erzeugen eines Szenengraphen, der dem einen oder den mehreren dreidimensionalen grafischen Objekten (208) zugeordnet ist;
Erzeugen eines grafischen Layouts, das dem einen oder den mehreren dreidimensionalen grafischen Objekten (108, 210) zugeordnet ist; und
Senden des einen oder der mehreren dreidimensionalen grafischen Objekte (108) an einen Renderer für dreidimensionale Grafik (114), der auf das grafische Layout und den Szenengraph (212) reagiert;
wobei das Senden der dreidimensionalen grafischen Objekte (108) an den Renderer für dreidimensionale Grafik (114) durch eine Funktion basierend auf der relativen Tiefe des erzeugten grafischen Layouts sequenziert wird.

2. Verfahren nach Anspruch 1, bei dem das Empfangen der einen oder der mehreren zweidimensionalen grafischen Objekte ferner das Empfangen, aus einem Speicher, des einen oder der mehreren zweidimensionalen grafischen Objekte umfasst, wobei die zwei oder die mehreren zweidimensionalen grafischen Objekte zuvor vor der Laufzeit im Speicher gespeichert waren.

3. Verfahren nach Anspruch 1 oder 2, wobei jedes der zweidimensionalen grafischen Objekte (102) ein oder mehrere zweidimensionale Zeichenprimitive beinhaltet, die unter Verwendung von skalierbarer Vektorgrafik dargestellt werden, oder wobei die einen oder die mehreren zweidimensionalen Zeichenprimitive ein beliebiges der Folgenden beinhalten: eine Vielzahl von Pfaden, eine Vielzahl von Gradienten, eine Vielzahl von Glyphen, eine Vielzahl von Masken und eine Vielzahl von Bildern.

4. Verfahren nach einem der vorhergehenden Ansprüche, wobei das Erzeugen des einen oder der mehreren dreidimensionalen grafischen Objekte ferner das Erzeugen eines Netzes umfasst, das für das eine oder die mehreren zweidimensionalen grafischen Objekte (102) repräsentativ ist, wobei das Netz eine Vielzahl von Primitiven umfasst, die durch einen Renderer für dreidimensionale Grafik (114) darstellbar sind, wobei eine Gesamtanzahl der Vielzahl von Primitiven, die das Netz beinhaltet, auf dem empfangenen Anzeigekenngrößenparameter basiert.

5. Verfahren nach einem der vorhergehenden Ansprüche, wobei der Anzeigekenngrößenparameter eines oder mehrere der Folgenden beinhaltet: eine Größe einer Zielanzeige, eine Auflösung der Zielanzeige, eine Pixeldichte der Zielanzeige und eine Zielanzeigeart.

6. Verfahren nach einem der vorhergehenden Ansprüche, wobei das Erzeugen der dreidimensionalen grafischen Objekte (108) aus den zweidimensionalen grafischen Objekten (102) einen oder mehrere der folgenden Vorgänge beinhaltet: Erzeugen von Texturen aus Gradienten, Tessellation einer Geometrie der zwei oder der mehreren dreidimensionalen grafischen Objekte (108) und ein Resampling von Bildern.

7. Verfahren nach einem der vorhergehenden Ansprüche, wobei das Erzeugen der dreidimensionalen grafischen Objekte (108) aus den zweidimensionalen grafischen Objekten (102) Folgendes beinhaltet: Erzeugen der dreidimensionalen grafischen Objekte (108) während einer Laufzeit, bei der die zweidimensionalen grafischen Objekte zuvor vor der Laufzeit (202) erstellt wurden.

8. Verfahren nach einem der vorhergehenden Ansprüche, wobei der Szenengraph die dreidimensionalen grafischen Objekte (108) als einen oder mehrere Blattknoten verknüpft, wobei jeder der Blattknoten einen Abschnitt einer Baumstruktur umfasst.

9. Verfahren nach Anspruch 8, wobei der Szenengraph das Gruppieren des einen oder der mehreren Blattknoten mit einem oder mehreren Zwischenknoten innerhalb des Szenengraphen beinhaltet.

10. Verfahren nach einem der vorhergehenden Ansprüche, wobei das grafische Layout ein beliebiges der Folgenden beinhaltet: eine Position, eine Tiefe und einen Blendingparameter, die jeweils dem Erzeugen der dreidimensionalen grafischen Objekte (108) zugeordnet sind.

11. Verfahren nach einem der vorhergehenden Ansprüche, wobei das Erzeugen eines oder mehrerer dreidimensionaler grafischer Objekte (108) ferner das Approximieren des einen oder der mehreren dreidimensionalen grafischen Objekte (102) basierend auf dem empfangenen Anzeigekenngrößenparameter (206) und des einen oder der mehreren zweidimensionalen grafischen Objekte umfasst, wobei jedes der erzeugten dreidimensionalen grafischen Objekte einen entsprechenden abgeleiteten Erzeugungsfehler basierend auf dem Approximieren beinhaltet, wobei jeder der entsprechenden abgeleiteten Erzeugungsfehler für jedes der dreidimensionalen grafischen Objekte unter einem vordefinierten Erzeugungsschwellenwert liegt, der dem Anzeigeparameter zugeordnet ist.

12. Computerlesbares Medium, umfassend ausführbare Anweisungen zum Implementieren des Verfahrens nach einem der vorhergehenden Ansprüche.

13. System zum beschleunigten Rendern von zweidimensionaler Grafik, **gekennzeichnet durch**:
Prozessor (302);
Speicher (304), der mit dem Prozessor (302) gekoppelt ist und Anweisungen enthält, die vom Prozessor (302) ausführbar sind, um das Verfahren nach einem der Ansprüche 1 bis 11 durchzuführen.

14. System nach Anspruch 13, bei dem die Anweisungen Folgendes bewirken:
ein Empfänger empfängt die zweidimensionalen grafischen Objekte (102);
eine grafische Anwendung (104) empfängt einen Anzeigekenngrößenparameter (118), der einen Detaillierungsgrad kennzeichnet, in dem Grafik auf einer Zielanzeige (118) angezeigt wird;
ein Generator für dreidimensionale Grafik (114), der auf den Anzeigekenngrößenparameter reagiert, erzeugt die dreidimensionalen grafischen Objekte (108) aus den zweidimensionalen grafischen Objekten (102);
ein Szenengraphgenerator (110) erzeugt den Szenengraphen, der den dreidimensionalen grafischen Objekten (108) zugeordnet ist;
ein Grafik-Layout-Generator (104, 120) erzeugt das grafische Layout, das den dreidimensionalen grafischen Objekten (108) zugeordnet ist; und
ein Sender sendet die dreidimensionalen grafischen Objekte (108) an den Renderer für dreidimensionale Grafik (114), wobei das Senden der dreidimensionalen grafischen Objekte (108) an den Renderer für dreidimensionale Grafik (114) durch eine Funktion sequenziert wird, die auf einer relativen Tiefe des erzeugten grafischen Layouts basiert.

15. System nach Anspruch 14, wobei der Prozessor (302) einen Grafikprozessor umfasst.

## Revendications

1. Procédé pour un rendu accéléré de graphiques en deux dimensions, le procédé consistant :
à recevoir un ou plusieurs objets graphiques en deux dimensions (202) ;
à recevoir un paramètre de caractéristique d'affichage qui identifie un niveau de détail selon lequel des graphiques sont affichés sur un dispositif d'affichage cible (118, 204) ;
à générer un ou plusieurs objets graphiques en trois dimensions (108) à partir du ou des objets graphiques en deux dimensions (102) en réponse au paramètre de caractéristique d'affichage reçu (206) ;
à créer un graphe de scène associé à l'objet ou aux objets graphiques en trois dimensions (208) ;
à créer une disposition graphique associée à l'objet ou aux objets graphiques en trois dimensions (108, 210) ; et
à envoyer le ou les objets graphiques en trois dimensions (108) à un dispositif de rendu graphique en trois dimensions (114) à la suite de la disposition graphique et du graphe de scène (212) ;
où l'envoi des objets graphiques en trois dimensions (108) au dispositif de rendu graphique en trois dimensions (114) est séquencé par une fonction basée sur la profondeur relative de la disposition graphique créée.

2. Procédé selon la revendication 1, où la réception du ou des objets graphiques en deux dimensions consiste en outre à recevoir, d'une mémoire, le ou les objets graphiques en deux dimensions, où les objets graphiques en deux dimensions ont été auparavant stockés dans la mémoire avant un temps d'exécution.

3. Procédé selon la revendication 1 ou 2, où chacun des objets graphiques en deux dimensions (102) comprend une ou plusieurs primitives de dessin en deux dimensions représentées à l'aide de graphiques vectoriels adaptables, ou
où la ou les primitives de dessin en deux dimensions comprennent l'une quelconque : d'une pluralité de chemins, d'une pluralité de gradients, d'une pluralité de glyphes, d'une pluralité de masques et d'une pluralité d'images.

4. Procédé selon l'une quelconque des revendications précédentes, où la génération du ou des objets graphiques en trois dimensions consiste en outre à générer un maillage représentant le ou les objets graphiques en deux dimensions (102), le maillage comprenant une pluralité de primitives pouvant être rendues par un dispositif de rendu graphique en trois dimensions (114), où une quantité totale de la pluralité de primitives incluses dans le maillage est basée sur le paramètre de caractéristique d'affichage reçu.

5. Procédé selon l'une quelconque des revendications précédentes, où le paramètre de caractéristique d'affichage comprend : une taille d'un dispositif d'affichage cible et/ou une résolution du dispositif d'affichage cible et/ou une densité de pixel du dispositif d'affichage cible et/ou un type de dispositif d'affichage cible.

6. Procédé selon l'une quelconque des revendications précédentes, où la génération des objets graphiques en trois dimensions (108) à partir des objets graphiques en deux dimensions (102) comprend une ou plusieurs actions quelconques comprenant : la génération de textures à partir de gradients, la disposition en mosaïque d'une géométrie des deux, ou plus, objets graphiques en trois dimensions (108) et un rééchantillonnage d'images.

7. Procédé selon l'une quelconque des revendications précédentes, où la génération des objets graphiques en trois dimensions (108) à partir des objets graphiques en deux dimensions (102) consiste : à générer les objets graphiques en trois dimensions (108) pendant un temps d'exécution pendant lequel les objets graphiques en deux dimensions ont été auparavant créés avant le temps d'exécution (202).

8. Procédé selon l'une quelconque des revendications précédentes, où le graphe de scène associe les objets graphiques en trois dimensions (108) comme étant un ou des noeuds feuilles où chacun des noeuds feuilles comprend une partie d'une structure arborescente.

9. Procédé selon la revendication 8, où le graphe de scène consiste à regrouper le ou les noeuds feuilles avec un ou plusieurs noeuds intermédiaires dans le graphe de scène.

10. Procédé selon l'une quelconque des revendications précédentes, où la disposition graphique comprend l'un quelconque des éléments suivants : un emplacement, une profondeur et un paramètre de mélange qui sont chacun associés à la génération des t objets graphiques en trois dimensions (108).

11. Procédé selon l'une quelconque des revendications précédentes, où la génération du ou des objets graphiques en trois dimensions (108) consiste en outre à approximer le ou les objets graphiques en trois dimensions (102) en se basant sur le paramètre de caractéristique d'affichage reçu (206) et sur le ou les objets graphiques en deux dimensions, où chacun des objets graphiques en trois dimensions générés comprend une erreur de génération dérivée correspondante basée sur l'approximation, où chacune des erreurs de génération dérivées correspondantes pour chacun des objets graphiques en trois dimensions est inférieure à un seuil de génération prédéfini associé au paramètre d'affichage.

12. Support lisible par ordinateur comprenant des instructions pouvant être exécutées pour mettre en oeuvre le procédé selon l'une quelconque des revendications précédentes.

13. Système pour un rendu accéléré de graphiques en deux dimensions **caractérisé par** :
un processeur (302) ;
une mémoire (304) couplée au processeur (302) contenant des instructions, pouvant être exécutées par le processeur (302), pour réaliser le procédé selon l'une quelconque des revendications 1 à 11.

14. Système selon la revendication 13, où les instructions contraignent :
un récepteur à recevoir les objets graphiques en deux dimensions (102) ;
une application graphique (104) à recevoir un paramètre de caractéristique d'affichage (118) qui identifie un niveau de détail selon lequel des graphiques sont affichés sur un dispositif d'affichage cible (118) ;
un générateur en trois dimensions (114) à générer les objets graphiques en trois dimensions (108) à partir des objets graphiques en deux dimensions (102) qui constituent une réponse au paramètre de caractéristique d'affichage reçu ;
un dispositif de création de graphe de scène (110) à créer le graphe de scène associé aux objets graphiques en trois dimensions (108) ;
un dispositif de création de disposition graphique (104, 120) à créer la disposition graphique associée aux objets graphiques en trois dimensions (108) ; et
un dispositif d'envoi à envoyer les objets graphiques en trois dimensions (108) au dispositif de rendu graphique en trois dimensions (114), où l'envoi des objets graphiques en trois dimensions (108) au dispositif de rendu graphique en trois dimensions (114) est séquencé par une fonction basée sur une profondeur relative de la disposition graphique créée.

15. Système selon la revendication 14, où le processeur (302) comprend un processeur graphique.
